Europäisches Patentamt

European Patent Office

Office européen des brevets

(11) Numéro de publication: **0 408 481 A1**

## (12) DEMANDE DE BREVET EUROPEEN

(21) Numéro de dépôt: 90440064.5

(22) Date de dépôt: **13.07.90**

(51) Int. Cl.⁵: **A01C 17/00, A01C 15/02**

(30) Priorité: **13.07.89 FR 8909675**

(43) Date de publication de la demande:
**16.01.91 Bulletin 91/03**

(84) Etats contractants désignés:
**AT BE CH DE DK ES FR GB GR IT LI LU NL SE**

(71) Demandeur: **Delimbeuf, Jean-Marie**
**30, Rue du 11 Novembre**
**F-27690 Lery(FR)**

(72) Inventeur: **Delimbeuf, Jean-Marie**
**30, Rue du 11 Novembre**
**F-27690 Lery(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) Dispositif d'épandage destiné notamment aux granulés anti-limaces.

(57) L'orifice 3 du réservoir 1 est calibré au moyen d'une rondelle 4 interchangeable solidarisée à la base 2 du réservoir 1 et traversée par une vis sans fin 6 actionnée par un moteur électrique 10 associé à un variateur 12 permettant d'en régler le sens et la vitesse de rotation, la vis sans fin 6 étant solidarisée à un disque répartiteur 7 centré sur elle disposé à une courte distance en-dessous de l'orifice 3 et comportant à sa surface des crans 8 régulièrement espacés et délimitant des espaces 9 permettant de réaliser la projection et la répartition des granulés sortant du réservoir 1 à travers l'espace 4' ménagé entre la rondelle 4 et la vis sans fin 6.

Fig 1

## DISPOSITIF D'EPANDAGE DESTINE NOTAMMENT AUX GRANULES ANTI-LIMACES

La présente invention a pour objet un dispositif d'épandage permettant de répandre sur une aire cultivée, dans les meilleures conditions de répartition en surface et en densité, des produits se présentant sous forme de granulés et destinés à éliminer les déprédateurs de cultures tels que les limacidés.

On sait que les attaques de ces déprédateurs se produisent dès les semailles, en sorte qu'il importe de traiter les aires ensemencées aussi rapidement que possible à l'aide des granulés spécifiques mis au point en vue de les éliminer.

Or à ce jour il n'existe pas de dispositif permettant d'opérer ce traitement de manière efficace, simultanément aux semailles : il est en effet impossible de mélanger les granulés anti-limaces aux grains à semer, en raison du fait que les grains semés doivent être aussitôt recouverts de terre alors que les granulés anti-limaces doivent nécessairement rester à la surface du sol.

Pour cette raison, ils sont généralement répandus à la main immédiatement après l'ensemencement du terrain, ou au moyen d'un dispositif d'épandage courramment utilisé pour les engrais.

L'un et l'autre procédé impliquent la nécessité de revenir sur le terrain ensemensé, entraînant un risque de détérioration des semis et d'inadéquation entre les surfaces ensemencées et les surfaces traitées, ainsi qu'une perte de temps et des coûts supplémentaires en main d'oeuvre.

La présente invention a pour but de remédier à ces inconvénients en permettant de réaliser le traitement anti-limaces du terrain simultanément à l'ensemencement, tout en assurant à tout instant une relation parfaitement adéquate entre la densité des semis et celle des granulés anti-limaces, évitant tout gaspillage de ces derniers soit par surdosage soit par débordement des zones ensemencées.

La présente invention a ainsi pour objet un dispositif d'épandage destiné notamment aux granulés anti-limaces, ce dispositif se caractérisant essentiellement en ce qu'il comporte, à la base d'un réservoir approprié, un orifice calibré par une rondelle traversée par une vis sans fin actinnée par un moteur électrique dont la vitesse de rotation est réglable et le sens de rotation inversable, un disque rotatif cranté à sa surface, disposé en-dessous de l'orifice et solidaire de la vis sans fin permettant, grâce à la force centrifuge, de réaliser la projection et la répartition sur 360° des granulés.

Grâce à son système de distribution, le dispositif selon l'invention permet une multiplicité de réglages en fonction, d'une part de la granulométrie du produit à épandre, et d'autre part de la répartition souhaitée pour ce produit compte tenu de l'étendue de la surface à traiter et de la densité d'épandage souhaitée.

En effet le réglage peut être obtenu par divers moyens qui peuvent être combinés : ainsi la rondelle calibrant l'orifice du réservoir peut être remplacée par une rondelle de de diamètre intérieur différent modifiant l'espace de sortie des granulés ménagé entre la vis sans fin et ladite rondelle, et donc le débit desdits granulés. Par ailleurs la vitesse de rotation du moteur électrique peut être modifiée, et donc celle de la vis sans fin et du disque répartiteur.

Enfin, l'inversion de rotation du moteur électrique permet de remplacer l'effet d'extraction de la vis sans fin par un simple effet de gravité, autorisant un épandage très ralenti.

D'autres caractéristiques et avantages de la présente invention ressortiront de la description qui suit et qui se réfère au dessin annexé, lequel en représente deux modes de réalisation non limitatifs.

Dans le dessin annexé :
- la figure 1 représente une vue en perspective avec arraché partiel d'un premier mode de réalisation d'un dispositif d'épandage selon l'invention.
- la figure 2 représente une vue en perspective avec arraché partiel d'un second mode de réalisation d'un dispositif d'épandage selon l'invention.

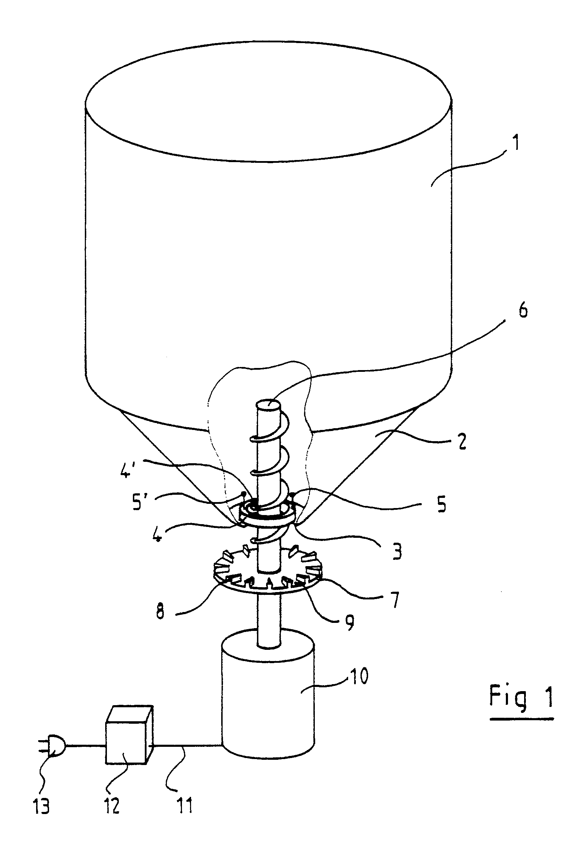

Si on se réfère d'abord à la figure 1, on voit que selon un premier mode de réalisation le dispositif selon l'invention comprend un réservoir cylindrique 1 dont la base 2 est tronconique et présente à son extrémité inférieure un orifice 3 muni d'une rondelle 4 solidarisée à la base 2 du réservoir 1 par deux boulons 5 et 5′.

Une vis sans fin 6 disposée dans l'axe vertical du réservoir 1 traverse la rondelle 4, se prolongeant de part et d'autre de l'orifice 3 et étant solidarisée, à l'extérieur du réservoir 1 et à une certaine distance de l'orifice 3, à un disque répartiteur 7 muni à sa face supérieure de crans ou d'ailettes 8 disposés à intervalles réguliers à la périphérie du disque 7, y ménageant des espaces 9 destinés à canaliser les granulés sortant de l'orifice 3 par l'espace 4′ ménagé entre la rondelle 4 et la vis sans fin 6, assurant leur répartition optimum sur 360°.

La vis sans fin 6 est solidaire à son extrémité inférieure de l'axe d'un moteur électrique 10 qui en assure la rotation, et celle du disque répartiteur 7 qui lui est solidarisée.

Le moteur 10 est connecté par un câble électrique 11 à un variateur 12 susceptible d'être connecté grâce à une prise 13 à une source de courant électrique, le variateur 12 faisant fonction à la fois d'interrupteur et de régulateur de tension et permettant de régler la vitesse et le sens de rotation de la vin sans fin 6.

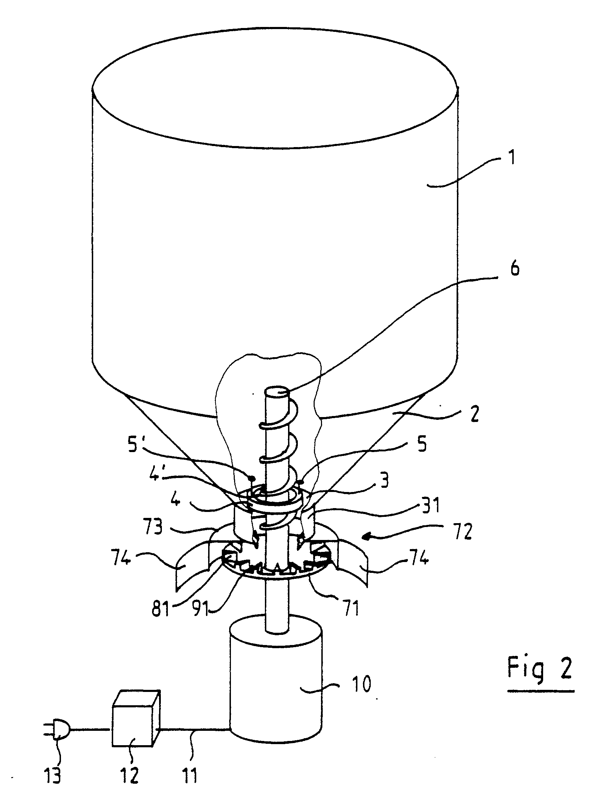

Si on se réfère ensuite à la figure 2, on voit que selon un second mode de réalisation le dispositif selon l'invention comprend des éléments identiques à ceux du premier mode de réalisation, à savoir un réservoir cylindrique 1 de base tronconique 2, une rondelle 4 disposée dans l'orifice 3 de la base 2 et solidarisée à ladite base 2 par deux boulons 5, 5′ ; une vis sans fin 6 disposée dans l'axe vertical du réservoir 1, traversant la rondelle 4 et entraînée en rotation par un moteur électrique 10 reliée par un câble électrique 11 à un variateur 12 et à une prise 13.

Toutefois, dans ce mode de réalisation, le disque répartiteur est remplacé par un cône répartiteur 71 vers le fond duquel les granulés sont canalisés au moyen d'un élément cylindrique 31 qui prolonge vers le bas l'orifice 3 du réservoir 1. Le cône répartiteur 71 comporte à sa surface des crans ou des ailettes 81 disposés à intervalles réguliers à sa périphérie, ménageant des espaces 91 qui canalisent les granulés sortant de l'élément cylindrique 31 par l'espace 4′ ménagé entre la rondelle 4 et la vis sans fin 6.

Un déflecteur 72 formé d'un demi-anneau 73 prolongé à ses deux extrémités par deux volets 74 réglables en orientation et positionné à proximité immédiate et en arrière du cône répartiteur 71 permet de délimiter la zone de projection des granulés.

Le cône répartiteur 71 présente l'avantage, sur le disque répartiteur 7 de la figure 1, de permettre d'éviter toute déperdition de granulés en dehors de l'aire d'épandage, les granulés susceptibles de sortir du réservoir après arrêt du moteur 10 se rassemblant dans le fond du cône répartiteur 71, d'où ils sont ensuite projetés sous l'effet de la force centrifuge lorsque le dispositif est remis en marche.

L'ensemble réservoir 1 - moteur 10 des deux modes de réalisation présentés ci-dessus peut être solidarisé par tout moyen approprié à un support non représenté, de telle sorte que l'ensemble ainsi constitué forme un tout susceptible d'être monté de manière amovible sur la structure de transport, le plus souvent le tracteur sur lequel est disposé le semoir à grains.

Selon un mode de réalisation particulièrement avantageux, le dispositif d'épandage selon l'invention est solidarisé à ce semoir, à une courte distance en arrière de ce dernier, dont il est avantageusement séparé par une plaque formant écran, de manière à éviter que les granulés anti-limaces ne soient projetés en arrière et ne parviennent au sol en même temps que les grains.

Il va de soi que la présente invention ne saurait être limitée à la description qui précède de deux de ses modes de réalisation, susceptibles de subir un certain nombre de modifications sans pour autant sortir du cadre de l'invention.

**Revendications**

1) Dispositif d'épandage, destiné notamment aux granulés anti-limacidés, du type comprenant un réservoir 1 comportant à sa base 2 un orifice 3, caractérisé en ce que ledit orifice 3 est calibré au moyen d'une rondelle 4 solidarisée à la base 2 du réservoir 1 et traversée par une vis sans fin 6 actionnée par un moteur électrique 10 associé à un variateur 12 permettant d'en régler le sens et la vitesse de rotation, la vis sans fin 6 étant solidarisée à un disque répartiteur 7 centré sur elle disposé à courte distance en-dessous de l'orifice 3 et comportant à sa surface des crans ou ailettes 8 régulièrement espacés délimitant des espaces 9 permettant de réaliser la projection et la répartition des granulés sortant du réservoir 1 à travers l'espace 4′ ménagé entre la rondelle 4 et la vis sans fin 6.

2) Dispositif d'épandage selon la revendication 1, caractérisé en ce que le réservoir 1 est cylindrique et sa base 2 tronconique, la rondelle 4 étant solidarisée à ladite base 2 par deux boulons 5 et 5′.

3) Dispositif d'épandage selon la revendication 1 ou la revendication 2, caractérisé en ce que la rondelle 4 est interchangeable, permettant de modifier l'espace 4′ existant entre la vis sans fin 6 et ladite rondelle 4.

4) Dispositif d'épandage selon l'une quelconque des revendications 1 à 3, caractérisé en ce que le disque répartiteur 7 est remplacé par un cône répartiteur 71 vers le fond duquel les granulés sont canalisés au moyen d'un élément cylindrique 31 qui prolonge l'orifice 3 du réservoir 1, le cône 71 comportant à sa surface des crans ou ailettes 81 régulièrement espacés permettant de régler la répartition des granulés.

5) Dispositif d'épandage selon la revendication 4, caractérisé en ce qu'un déflecteur 72 est positionné en arrière et à proximité immédiate du cône répartiteur 71, étant consti tué d'un demi-anneau 73 prolongé à ses deux extrémités par deux volets 74 orientables.

6) Dispositif d'épandage selon l'une quelconque des revendications précédentes, caractérisé en ce que le réservoir 1 et le moteur 10 sont solidarisés à un support de telle sorte que l'ensemble ainsi constitué forme un tout susceptible d'être monté de manière amovible sur une structure de transport.

7) Dispositif d'épandage selon la revendication 6, caractérisé en ce qu'il est solidarisé à un semoir à grains installé sur ladite structure de transport, étant disposé à une courte distance et en arrière de ce dernier, dont il est séparé par une plaque formant écran.

Fig 1

Fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-1564804 (PEARCE)<br>* page 1, ligne 65 - page 2, ligne 46; figures 1, 2 * | 1 | A01C17/00<br>A01C15/02 |
| Y | US-A-2687307 (AUSTERMILLER)<br>* colonne 2, ligne 9 - colonne 5, ligne 53; figures 1-8 * | 1 | |
| A | | 2, 6 | |
| A | US-A-2676695 (STEELE)<br>* colonne 2, ligne 7 - colonne 5, ligne 7; figures 1-5 * | 1, 6 | |
| A | GB-A-685495 (TENNENT)<br>* page 1, ligne 42 - page 2, ligne 56; figures 1-3 * | 1, 2, 4 | |
| A | GB-A-621947 (DEVENISH)<br>* page 2, ligne 37 - page 3, ligne 47; figures 1, 2 * | 1, 4 | |
| A | FR-A-1400911 (AMAZONEN-WERKE)<br>* page 2, alinéa 5-7; figures 1, 2 * | 1, 5 | DOMAINES TECHNIQUES RECHERCHES (Int. Cl.5)<br><br>A01C<br>A01M |

Le présent rapport a été établi pour toutes les revendications

| Lieu de la recherche | Date d'achèvement de la recherche | Examinateur |
|---|---|---|
| LA HAYE | 23 OCTOBRE 1990 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)